# EUROPÄISCHE PATENTSCHRIFT

(11) **EP 3 013 517 B1**
(45) Veröffentlichungstag und Bekanntmachung des Hinweises auf die Patenterteilung: **17.04.2019**
(21) Anmeldenummer: 14736625.6
(22) Anmeldetag: 30.06.2014
(51) Int. Cl.: B23K 26/18, B23K 26/38, B23K 26/30

(54) **VERFAHREN ZUM LASERBOHREN ODER LASERSCHNEIDEN EINES WERKSTÜCKS**
METHOD FOR LASER BORING OR LASER CUTTING A WORKPIECE
PROCÉDÉ DE PERÇAGE AU LASER OU DE DÉCOUPAGE AU LASER D'UNE PIÈCE

(30) Priorität: 28.06.2013 DE 102013212665
(43) Veröffentlichungstag der Anmeldung: 04.05.2016
(73) Patentinhaber: Laser Zentrum Hannover E.V., 30419 Hannover (DE); Robert Bosch GmbH, 70469 Stuttgart (DE)
(72) Erfinder: UNGER, Claudia, 09119 Chemnitz (DE); SAJTI, Laszlo, 2700 Wiener Neustadt (DE); KOCH, Jürgen, 30451 Hannover (DE); BAUER, Thorsten, 96117 Memmelsdorf (DE)
(74) Vertreter: Friedrich, Andreas
(86) Internationale Anmeldenummer: PCT/EP2014/001778
(87) Internationale Veröffentlichungsnummer: WO 2014/206577

(56) Entgegenhaltungen:
- WO-A1-00/69594
- US-A1- 2008 116 426

## Beschreibung

Die Erfindung betrifft ein Verfahren zum Laserbohren oder Laserschneiden eines Werkstücks, wobei von einem Laser ausgesandte elektromagnetische Strahlung auf das Werkstück trifft und sich an einer dem Laser abgewandten Seite des Werkstückes eine Flüssigkeit befindet, in der Nanopartikel enthalten sind, so dass von dem Laser ausgesandte elektromagnetische Strahlung auf die Nanopartikel trifft, wenn die elektromagnetische Strahlung das Werkstück durchdrungen hat.

Um Bohrungen mit hohem Aspektverhältnis und sehr guter Kantenqualität mittels Laser in wirtschaftlicher Prozesszeit zu erzeugen, sind gepulste Laser mit hoher Pulsenergie erforderlich. Nachdem die von diesen gepulsten Lasern ausgesandte elektromagnetische Strahlung das Werkstück durchdrungen hat, stellt sie für weitere sich im Strahlengang befindliche Materialien und/oder Personen eine Gefahr dar. Insbesondere wenn sich gegenüber der Bohrlochaustrittseite in nur geringem Abstand weiteres Material befindet, wird dieses Material in der Regel durch die austretende Laserstrahlung geschädigt. Der Bohr- oder Schneidprozess kann nicht vor dem Eintreten der Schädigung abgebrochen werden, da das Durchgangsloch im Werkstück nach dem Öffnen noch auf die geforderte Form gebracht werden muss. Die auftretenden Schäden sind für viele Anwendungen, wie das Laserbohren von Einspritzdüsen oder das Erzeugen von Kühlbohrungen in Turbinenschaufeln nicht hinnehmbar. Auch beim Schneiden von Rohrmaterial mit geringem Innendurchmesser, beispielsweise bei der Herstellung medizinischer Stents, kann das Problem auftreten.

Um das hinter dem Bohrloch beziehungsweise Schneidloch liegende Material zu schützen, sind aus dem Stand der Technik unterschiedliche Vorgehensweisen bekannt. In allen wird in Strahlrichtung der elektromagnetischen Strahlung hinter dem Werkstück ein Material angeordnet, um die elektromagnetische Strahlung daran zu hindern, Schaden anzurichten. Prinzipiell kommen hierbei Feststoffe, zirkulierende Flüssigkeiten und Fluide oder Partikelsuspensionen in Frage.

Aus der US 6,303,901 B1 ist es beispielsweise bekannt, in den Zwischenraum zwischen dem zu durchbohrenden oder zu durchtrennenden Material und einem rückseitigen weiteren Material ein monoatomares oder molekulares Gas anzuordnen, das die Photonen der Laserstrahlung absorbiert und so ein hochdichtes Plasma bildet. In einer anderen Ausführungsform ist der Zwischenraum mit einem Festkörper oder einer hochviskosen Flüssigkeit gefüllt.

Insbesondere die Verwendung von Feststoffen zum Abfangen der elektromagnetischen Strahlung ist mit einigen Nachteilen verbunden. Um derartige Feststoffe, beispielsweise Keramikstäbe oder -platten, verwenden zu können, muss der Hohlraum zwischen dem zu durchtrennenden Werkstück und einem Material auf der Rückseite leicht von außen erreichbar sein. Zudem wird der zwischengelagerte Feststoff abgetragen und muss entweder nachgeschoben oder erneuert werden. Außerdem müssen die Abtragspartikel des Feststoffes, die durch die elektromagnetische Strahlung des Lasers abgelöst werden, am Ende des Bohrprozesses leicht aus dem Hohlraum entfernbar sein.

Bei der Herstellung von Einspritzdüsen mit beispielsweise acht separaten Bohrungen kann es dabei erforderlich sein, den eingesetzten Festkörper nach jeder Bohrung zu erneuern. Dies verlängert die Prozesszeit, verringert das Automatisierungspotential und ist kostenintensiv.

Aus der WO 2007/089469 A2 ist es bekannt, den Zwischenraum mit einem trockenen, stabilen Pulver, beispielsweise Aluminiumoxidpulver, zu füllen. Dabei wird die Größe der einzelnen Partikel zwischen 10 µm und 1000 µm gewählt. Auch bei dieser Lösung muss jedoch das Pulver nach dem Bohren aus dem Hohlraum entfernt und für die nächste Bohrung gegebenenfalls frisches Pulver nachgefüllt werden.

Die WO 00/69594 A1 sowie die US 6,365,871 B1 schlagen dagegen vor, eine Flüssigkeit zu verwenden, in der Farbstoffe vorhanden sind. Diese Farbstoffe können dabei so gewählt werden, dass sie insbesondere Photonen, die die Wellenlänge des Laserlichtes aufweisen, absorbieren. Dabei kommt es in den Farbstoffmolekülen zu einer elektronischen Anregung, bei der Elektronen in höhere Energieniveaus angehoben werden. Die Photonen werden auf diese Weise absorbiert.

Nachteilig ist jedoch, dass derartige Farbstoffe relativ schnell ausbleichen und für die elektromagnetische Strahlung des Lasers transparent werden. Sie sind folglich nur für eine kurzfristige Absorption der elektromagnetischen Strahlung geeignet. Zudem verfügen sie in der Regel nur über einen relativ geringen Absorptionsquerschnitt.

Zusätzlich zu den Farbstoffen können Mikropartikel in der Flüssigkeit enthalten sein, die das einfallende Laserlicht streuen und so die Energiedichte der elektromagnetischen Strahlung verringern, so dass sie insbesondere in Kombination mit der Absorption durch den Farbstoff nicht mehr ausreichend ist, um an unerwünschten Stellen Material abzutragen.

Um eine ausreichend starke Streuung der vom Laser ausgesandten elektromagnetischen Strahlung zu erreichen, muss jedoch die Partikelkonzentration in der Flüssigkeit in diesem Fall sehr hoch sein. Dies führt zu einer hohen Viskosität, die eine hohe Fließgeschwindigkeit in engen Hohlräumen verhindert. Dies hat zum einen den Nachteil, dass die hochviskose Flüssigkeit nur schwer aus insbesondere engen Hohlräumen wieder entfernt werden kann und zum anderen besteht bei geringen Fließgeschwindigkeiten die Gefahr, dass die elektromagnetische Strahlung die Flüssigkeit lokal verdampft und somit in diesem Bereich kein Schutz mehr für dahinter liegende Materialien besteht. Es entstehen Blasen, durch die die Laserstrahlung nahezu ungehindert hindurchtreten kann.

Aus der US 2008/0116426 A1 ist ein Verfahren bekannt, bei dem eine Kunstharzmischung mit lichtabsorbierenden Nanopartikeln versetzt wird. Ein daraus hergestelltes Kunststoffelement kann in einem Kunststoff-Schweiß-Verfahren an ein anderes Kunststoffelement angeschweißt werden. Dazu wird das ansonsten für die Laserstrahlung transparente Material mit einem Laser beaufschlagt, dessen Licht von den Nanopartikeln absorbiert wird, die auf diese Weise dafür sorgen, dass die umgebende Kunstharzmischung erwärmt und aufgeschmolzen wird.

Der vorliegenden Erfindung liegt daher die Aufgabe zugrunde, ein Verfahren zum Laserbohren oder Laserschneiden eines Werkstückes so weiterzuentwickeln, dass eine Schädigung von hinter dem Werkstück befindlichen Materialien auch bei geringen Abständen möglichst sicher verhindert, wobei gleichzeitig die Flüssigkeit mit Nanopartikeln leicht aus gegebenenfalls geringen Hohlräumen entfernbar und dennoch langfristig verwendbar ist.

Die Erfindung löst die gestellte Aufgabe durch ein Verfahren gemäß dem Oberbegriff des Anspruchs 1, das sich dadurch auszeichnet, dass die Nanopartikel derart ausgebildet sind, dass der überwiegende Anteil der elektromagnetischen Strahlung von den Nanopartikeln absorbiert wird, indem die elektromagnetische Strahlung in den Nanopartikeln kollektive Anregungen erzeugt, wobei Form, Größe und Material der Nanopartikel auf die eingestrahlte Laserwellenlänge so abgestimmt werden, dass sich eine Plasmonenresonanz oder die Resonanz einer anderen kollektiven Anregung bei der Wellenlänge des eingestrahlten Laserlichtes ergibt.

Die Nanopartikel, die sich in der Flüssigkeit befinden, müssen folglich so ausgebildet sein, dass eine Ankopplung der elektromagnetischen Laserstrahlung an die kollektiven Anregungen möglich ist. Unter einer kollektiven Anregung wird dabei vorliegend eine Anregung verstanden, deren Anregungsenergie von der Größe der einzelnen Nanopartikel abhängt. Bei diesen Anregungen sind insbesondere mehrere Teilchen, beispielsweise mehrere Atome, Moleküle oder Elektronen eines Nanopartikels beteiligt. Damit unterscheidet sich die kollektive Anregung fundamental von den Anregungen, die für die Absorption von elektromagnetischer Strahlung bei Farbstoffen verantwortlich sind. Bei Farbstoffen und Pigmenten erfolgt die Absorption der elektromagnetischen Strahlung dadurch, dass Elektronen innerhalb eines Moleküls oder Atoms auf ein höheres Energieniveau angehoben werden. Die Anregungsenergie, die dafür nötig ist, ist im Wesentlichen nicht von der Anzahl der vorhandenen Moleküle abhängig, da jeweils nur ein einziges Molekül und oftmals auch nur ein einzelnes Elektron am Anregungsvorgang beteiligt ist. Bei einer kollektiven Anregung im Sinne der vorliegenden Anmeldung ist dies anders. Bei einer derartigen kollektiven Anregung sind mehrere Elektronen, Atomkerne, Atome oder Moleküle beteiligt. Die Energie, die zur Erzeugung einer derartigen kollektiven Anregung nötig ist, hängt dabei von der Größe des jeweiligen Nanopartikels ab.

Unter dem überwiegenden Anteil der elektromagnetischen Strahlung werden insbesondere mehr als 50%, vorteilhafterweise mehr als 75%, besonders bevorzugt mehr als 90% der elektromagnetischen Strahlung verstanden. Wichtig ist insbesondere, dass soviel der elektromagnetischen Strahlung absorbiert wird, dass der verbleibende Anteil der Strahlung keine Schäden am im Rückraum befindlichen Material hervorrufen kann.

Durch das erfindungsgemäße Verfahren wird die Qualität der beispielsweise durch Laserbohren hergestellten Bohrlöcher deutlich erhöht. Dies betrifft unterschiedliche Aspekte der Bohrlöcher. Bei einem Bohrloch handelt es sich um einen Tunnel, der in das Material des Werkstücks hineingebohrt wird. Er verfügt folglich über eine Vorder- oder Eintrittsseite mit einem Eintrittsloch und eine Rück- oder Austrittsseite mit einem Austrittsloch. Oftmals ist es gewünscht, dass der Durchmesser des Eintrittsloches an der Eintrittsseite und der Durchmesser des Austrittsloches auf der Austrittsseite in etwa gleich groß sind. Bohrversuche mit einem Laserscanner und einem Pikosekunden-Laser haben gezeigt, dass beispielsweise bei einer Länge des Bohrloches von 700 µm, die der Dicke des zu durchbohrenden Werkstückes entspricht, der Durchmesser des Austrittsloches auf der Austrittsseite weniger als halb so groß ist wie der Durchmesser des Eintrittsloches auf der Eintrittsseite. Die Verwendung eines Rückraumschutzes gemäß dem Stand der Technik mit beispielsweise einer pastösen Flüssigkeit konnte die Bohrgeometrie bei durchgeführten Versuchen nicht verbessern. Nachteilig ist jedoch bei diesem Backing, dass sich Partikel des verwendeten Rückraumschutzes an dem zu durchbohrenden Werkstück anlagerten.

Wird jedoch das in der vorliegenden Erfindung beschriebene Nanopartikel-Backing, also die Flüssigkeit mit den darin sich befindenden Nanopartikeln, verwendet, wird die Bohrlochgeometrie deutlich verbessert. Versuche haben gezeigt, dass beispielsweise das Austrittsloch auf der Austrittsseite verkleinert wird. Bei einer Bohrlochlänge von 700 µm, die wieder der Dicke des zu durchbohrenden Werkstückes entspricht, und einem Durchmesser des Eintrittsloches von ca. 120 µm lag der Durchmesser des Austrittsloches bei ca 80 µm. Dabei wurden Gold-Nanopartikel in einer Konzentration von 894 mg/l verwendet. Zudem kommt es zu einer Verbesserung der Rundheit des Bohrloches auf der Austrittsseite und zu einer Kantenglättung. Durch das erfindungsgemäße Verfahren wird folglich überraschenderweise nicht nur ein besonders guter Rückraumschutz gewährleistet, sondern gleichzeitig auch eine deutliche Verbesserung der Bohrlochgeometrie erreicht.

Im Vergleich zu einem Rückraumschutz aus dem Stand der Technik, bei dem Mikropartikel verwendet wurden, die auftretende und durch das Bohrloch hindurchtretende Laserstrahlung streuen und so deren Energiedichte reduzieren sollen, kommt es bei der hier verwendeten Flüssigkeit mit darin enthaltenen Nanopartikeln zu einer größeren Erwärmung des Werkstücks auf der Rückseite, was gegebenenfalls für die verbesserte Bohrlochgeometrie verantwortlich ist. Zudem werden aus dem Bohrloch entfernte Partikel mit der Flüssigkeit leichter und schneller entfernt, da sie aufgrund der relativ geringen Konzentration an Nanopartikeln im Vergleich zu den pastösen Rückraumschutzmaterialien aus dem Stand der Technik eine deutlich geringere Viskosität aufweist, was zu einer erhöhten Fließgeschwindigkeit führt.

In einer bevorzugten Ausgestaltung handelt es sich bei den kollektiven Anregungen um Plasmonen, insbesondere Oberflächenplasmonen. Dabei handelt es sich vereinfacht gesagt um Schwingungen der Elektronen im Nanopartikel, die durch das elektromagnetische Feld der einfallenden elektromagnetischen Laserstrahlung hervorgerufen werden. Derartige Plasmonen beziehungsweise plasmonische Anregungen verfügen über einen deutlich größeren Wirkungsquerschnitt mit der einfallenden elektromagnetischen Strahlung, als die für Einzelelektronenanregungen, wie sie in Farbstoffen vorkommen, der Fall ist. Daher können Nanopartikel, in denen derartige Anregungen erzeugt werden können, in deutlich geringerer Konzentration in der Flüssigkeit vorliegen, als dies beispielsweise bei Farbstoffen und Pigmenten der Fall ist. Dadurch wird erreicht, dass die Viskosität der Flüssigkeit mit den Nanopartikeln reduziert ist, so dass hohe Fließgeschwindigkeiten und allgemein ein gutes Fließverhalten erreicht werden kann.

Entspricht nun die Energie der einfallenden elektromagnetischen Laserstrahlung der für die Erzeugung der kollektiven Anregung nötigen Energie, kommt es zu einer Plasmonenresonanz, die dafür sorgt, dass die Nanopartikel in der Flüssigkeit eine extrem geringe Transmission aufweisen. Dies bedeutet, dass ein großer Anteil der elektromagnetischen Strahlung von den Nanopartikeln absorbiert wird, so dass diese Strahlung keinen Schaden bei weiteren Materialien anrichten kann.

Vorteilhafterweise weisen die Nanopartikel eine ellipsoide Form, eine Stäbchenform, eine Oktaeder- oder Dekaederform oder eine Quaderform auf. Unter ellipsoiden Formen werden dabei alle sphärischen Formen, also kugelförmig, oval, ellipsenförmig verstanden. Die Anregungsenergie, die für das Erzeugen der kollektiven Anregungen nötig ist, hängt dabei insbesondere von den räumlichen Ausdehnungen des jeweiligen Nanopartikels ab. Insbesondere für den Fall, dass die räumlichen Ausdehnungen für zwei unterschiedliche Raumrichtungen deutlich unterschiedlich sind, ist es daher möglich, unterschiedliche kollektive Anregungen bei deutlich unterschiedlichen Anregungsenergien in dem gleichen Nanopartikel anzuregen. Dies ist insbesondere für den Fall von Vorteil, dass beispielsweise mit zwei unterschiedlichen Laserwellenlängen gearbeitet wird, die beide gleichzeitig von den Nanopartikeln absorbiert werden sollen.

Oftmals ist auch das Verhältnis der räumlichen Ausdehnungen in zwei unterschiedlichen Raumrichtungen für die Anregungsenergie der kollektiven Anregungen ausschlaggebend. Bei stäbchenförmigen Nanopartikeln ist hier insbesondere das Verhältnis von Längsausdehnung entlang der Längsrichtung des Stäbchens zur Ausdehnung in einer Richtung senkrecht auf dieser Längsausdehndung, der sogenannten Querrichtung, zu nennen. Werden beispielsweise derartige stäbchenförmige Nanopartikel aus Gold verwendet, führt ein Verhältnis der räumlichen Ausdehnungen in Längsrichtung zur Querrichtung von 4 zu einer Anregungsenergie eines Oberflächenplasmons, durch die infrarotes Laserlicht absorbiert werden kann. So können beispielsweise stäbchenförmige Nanopartikel verwendet werden, die in Längsrichtung 10 nm und in einer Querrichtung senkrecht dazu 2,5 nm Ausdehnung aufweisen.

Natürlich ist es möglich, für eine möglichst breitbandige Absorption auch unterschiedlich geformte Nanopartikel zu mischen. Auch Nanopartikel, die prinzipiell die gleiche Form aber unterschiedliche räumliche Ausdehnungen aufweisen, können auf diese Weise gemischt werden und führen so dazu, dass elektromagnetische Strahlung unterschiedlichster Energie und Wellenlänge absorbiert werden kann.

Nanopartikel können heute in unterschiedlichsten Formen und Größen hergestellt werden. Wie bereits dargelegt, sind dabei unter anderem die Ausdehnungen der Nanopartikel und/oder das sogenannte Aspektverhältnis, also das Verhältnis von Länge zu Breite eines Nanopartikels, von entscheidender Bedeutung für die Anregungsenergie der kollektiven Anregung und damit für die Wellenlänge der am besten absorbierten elektromagnetischen Strahlung. Gleichzeitig hängt diese Wellenlänge von dem verwendeten Material ab. Versuche haben gezeigt, dass die Resonanz der Wellenlängen der absorbierten elektromagnetischen Strahlung durch die Veränderung der Größe der Nanopartikel verschoben werden können. Bei sphärischen Silber-Nanopartikeln in Wasser hat sich so herausgestellt, dass Nanopartikel mit einem Radius von 3 nm eine Resonanz bei 380 nm aufweisen, und somit elektromagnetische Strahlung dieser Wellenlänge absorbieren können. Ein Radius von 10 nm führt zu einer Resonanz bei 390 nm, ein Radius von 25 nm zu einer Resonanz bei 410 nm, ein Radius von 50 nm zu einer Resonanz bei 480 nm und ein Radius von 100 nm führt bei sphärischen Silber-Nanopartikeln zu einer Resonanz bei 770 nm. Man erkennt folglich, dass bereits durch die Variation der Größe der sphärischen Silber-Nanopartikel die Position der Resonanz und damit die Wellenlänge der absoprbierbaren Laserstrahlung deutlich verschoben werden kann.

Gleiches gilt beispielsweise für sphärische Gold-Nanopartikel in Wasser. Ein Radius von 3 nm führt hier zu einer Resonanz bei 515 nm, während eine Vergrößerung des Radius auf 10 nm zu einer Resonanz bei 530 nm führt. Eine weitere Vergrößerung des Radius führt auch hier zu einer Vergrößerung der Wellenlänge der absorbierten elektromagnetischen Strahlung. Ein Radius von 25 nm führt zu einer Absorption bei 540 nm, ein Radius von 50 nm zu einer Absorption bei 575 nm, ein Radius von 100 nm zu einer Absorption von 770 nm und ein Radius von 150 nm zu einer Absorption bei einer Wellenlänge von 1100 nm.

Zieht man nun in Betracht, dass klassische Laserwellenlängen zum Schneiden und Bohren bei 800 nm, 1030 nm oder 1064 nm liegen, können für jede der gewählten Wellenlängen beispielsweise sphärische Gold-Nanopartikel in Wasser gefunden werden, die aufgrund ihres Durchmessers bzw. des Radius geeignet sind, genau die eingestrahlte Laserwellenlänge zu absorbieren. Alternativ dazu könnte die Laserfrequenz auch verdoppelt und damit die Wellenlänge der Laserstrahlung halbiert werden. Damit wären Laserwellenlängen von 400 nm, 515 nm oder 532 nm verwendbar, die beispielsweise durch sehr kleine sphärische Gold-Nanopartikel oder sphärische Silber-Nanopartikel in Wasser absorbiert werden könnten.

Werden statt sphärischer Nanopartikel so genannte Nanorods, also stäbchenförmige Nanopartikel, in Wasser verwendet, ist insbesondere das Aspektverhältnis der Nanopartikel, also das Verhältnis von Länge zu Breite der Stäbchen entscheidend. Bei Gold führt ein derartiges Aspektverhältnis von 1 zu einer Absorption bei einer Wellenlänge von 530 nm. Wird das Aspektverhältnis auf 2,5 vergrößert, verschiebt sich die absorbierte Wellenlänge zu 700 nm, bei einen Aspektverhältnis von 4 zu 800 nm, bei einem Aspektverhältnis von 4,5 zu 850 nm und bei einem Aspektverhältnis von 5,5 zu 900 nm. In dem Fachartikel "Preparation and Growth Mechanism of Gold Nanorods Using Seed-Mediated Growth Method" aus der Zeitschrift Chem. Mater. 2003, 15, 1957-1962 sind unterschiedliche stäbchenförmige Gold-Nanopartikel bekannt, deren Aspektverhältnisse zu Resonanzen bei 700 nm, 760 nm, 790 nm, 880 nm, 1130 nm und 1250 nm führen. Ein Aspektverhältnis von 6,5 führt dabei zu einer Absorptionswellenlänge von 1000 nm, während ein Aspektverhältnis von 9 zu einer Absorptionswellenlänge von 1300 nm führt. Das Aspektverhältnis der einzelnen Nanopartikel kann dabei sehr fein und genau eingestellt werden, so dass auch die Wellenlänge der absorbierten elektromagnetischen Strahlung eingestellt und auf die jeweilige Laserwellenlänge vorteilhafterweise genau abgestimmt werden kann.

Natürlich sind die Formen der Nanopartikel nicht auf sphärische, ellipsoide oder Stäbchenformen beschränkt. Aus dem Review-Artikel "Modelling the optical response of gold nanoparticles", erschienen im Chem.Soc.Rev, 2008, 37, 1792-1805, sind beispielsweise unterschiedliche Formen von Stäbchen, beispielsweise mit rundem oder viereckigem Querschnitt oder verschiedene Größen von Nano-Oktaedern untersucht worden. Auch Nanodekaeder sind herstell- und verwendbar. Auch hier haben die räumlichen Ausdehnungen und das Verhältnis dieser Ausdehnungen zueinander einen entscheidenden Einfluss auf die Wellenlänge der absorbierten elektromagnetischen Strahlung.

Trifft nun die elektromagnetische Laserstrahlung auf einen derartigen Nanopartikel, wird ein solches Photon vom Nanopartikel absorbiert. Es hat sich dabei herausgestellt, dass die Nanopartikel durch diese Laserbestrahlung fragmentieren können. Diese Fragmentierung beruht auf dem Schmelzen und Verdampfen durch die Laserstrahlung. Dieser Prozess endet jedoch beispielsweise für Goldpartikel bei einer durchschnittlichen Größe von ca. 5 nm, da der Absorptionsquerschnitt dieser kleinen Nanopartikel zu klein ist, um durch die Laserstrahlung eine Energiemenge aufzunehmen, die für eine weitere Fragmentierung nötig wäre. Die Größe, bei der die Fragmentierung der Nanopartikel durch die Laserstrahlung endet, wird im folgenden endgültige Größe genannt. Sofern Nanopartikel dieser endgültigen Größe, die also durch weitere Laserbestrahlung nicht verkleinert werden können, kollektive Anregungen aufweisen, die eine für die eingestrahlte elektromagnetische Laserstrahlung passende Anregungsenergie aufweisen, ist es insbesondere bei sphärischen Nanopartikeln möglich, diese Flüssigkeit mit den darin enthaltenen Nanopartikeln quasi verschleißfrei weiterzuverwenden. Weisen die Nanopartikel eine andere Form auf, beispielsweise Stäbchen- oder Quaderform, gilt dies nicht so uneingeschränkt, da auch diese Nanopartikel im Zuge der Laserbestrahlung zerfallen und fragmentieren, wobei sich gegebenenfalls das Verhältnis der räumlichen Ausdehnungen in unterschiedlichen Raumrichtungen verändert.

Das Fragmentieren der Nanopartikel findet insbesondere bei der Bestrahlung mit gepulsten Lasern statt. In diesem Fall ist die lokale Energiedichte in jedem Puls so hoch, dass es zum Fragmentieren der Nanopartikel kommt. Diese gepulsten Laser sind nötig, um einige Materialien bestimmter Werkstücke bearbeiten zu können. Bei anderen Werkstoffen, wie beispielsweise Kunststoff, ist eine geringere Energiedichte ausreichend, so dass diese beispielsweise mit einem cw-Laser, also einem Dauerstrichlaser, bearbeitet werden können. In diesem Fall ist die lokale Energiedichte der Laserstrahlung zu gering, um bei den Nanopartikeln zu einem Fragmentieren zu führen. Dies hat den großen Vorteil, dass auch Nanopartikel, die nicht sphärisch ausgebildet sind, nicht zerfallen und fragmentieren, so dass auch diese Nanopartikel, die auf die Wellenlänge der gewünschten Laserstrahlung abgestimmt sind, nahezu unbegrenzt wieder- und weiterverwendet werden können. In diesem Fall ist es folglich nicht nötig, zur Bearbeitung mehrerer Werkstücke jeweils frische Nanopartikel in einer neuen Flüssigkeit vorzusehen.

In einer bevorzugten Ausgestaltung des Verfahrens weist die elektromagnetische Strahlung eine Wellenlänge zwischen 380 nm und 650 nm, vorzugsweise zwischen 500 nm und 530 nm, insbesondere 515 nm auf.

Durch die Wahl der Größe der verwendeten Nanopartikel lässt sich, wie bereits dargelegt, die für die Erzeugung der kollektiven Anregungen nötige Anregungsenergie einstellen. Insbesondere für sphärische Goldpartikel hat sich herausgestellt, dass diese bei ihrer endgültigen Größe von ca. 5 nm, die folglich durch weitere Laserbestrahlunge nicht verkleinert werden kann, eine Anregungsenergie aufweisen, die einem Photon mit der Wellenlänge von 515 nm entspricht. Wird diese Wellenlänge nun für elektromagnetische Strahlungsquelle, also den Laser, verwendet, ist sichergestellt, dass auch diesem "stationären" Zustand, in dem sich die Größenverteilung der Nanopartikel nicht weiter ändert, ein optimaler Absorptionsquerschnitt der Nanopartikel für die einfallende elektromagnetische Laserstrahlung gewährleistet ist. Werden andere Materialien oder andere Ausgestaltungen von Nanopartikel verwendet, können diese endgültige Größe und damit auch die "endgültige" Anregungsenergie von dem genannten Zahlenwert abweichen. Es ist jedoch allgemein von Vorteil, die Wellenlänge der eingestrahlten elektromagnetischen Laserstrahlung so zu wählen, dass die gewählten Nanopartikel auch im Langzeitbetrieb eine kollektive Anregung mit einer Anregungsenergie aufweisen, die der Energie der Photonen mit der eingestrahlten Wellenlänge entspricht.

Vorzugsweise werden folglich Goldpartikel insbesondere mit sphärischer Form und ein Laser mit einer Wellenlänge von 515 nm verwendet.

In einer alternativen Ausgestaltung des Verfahrens weist die elektromagnetische Strahlung eine Wellenlänge zwischen 950 nm und 1100 nm bevorzugt zwischen 1000 nm und 1050 nm, insbesondere 1030 nm. Insbesondere 1030 nm entspricht einer der gängigen Wellenlängen bei der Laserbearbeitung, so dass mit dieser Wellenlänge das Verfahren in einer Vielzahl praktischer Anwendungen durchführbar ist.

Vorteilhafterweise wird bei dem hier beschriebenen Verfahren die Flüssigkeit mit den Nanopartikeln in einem Kreislauf verwendet. Dadurch, dass für eine ausreichende Absorption der eingestrahlten Laserstrahlung nur eine relativ geringe Konzentration an Nanopartikeln in der Flüssigkeit vorhanden sein muss, wird eine ausreichend hohe Fließgeschwindigkeit durch die relativ geringe Viskosität der Flüssigkeit, die beispielsweise Wasser oder Aceton oder ein anderes organisches Lösungsmittel sein kann, gewährleistet. Die Flüssigkeit mit den darin enthaltenen Nanopartikeln wird an der Bohr- beziehungsweise Schneidstelle des Werkstückes vorbeigeführt. Anschließend werden eventuelle Partikel des Werkstückes, die durch die Laserbearbeitung vom Werkstück gelöst und in der Flüssigkeit aufgenommen werden, beispielsweise durch die Einwirkung mit einem externen Magnetfeld oder einer Filtration entfernt. Das so gereinigte Kolloid aus Flüssigkeit mit darin enthaltenen Nanopartikeln kann anschließend gegebenenfalls abgekühlt und erneut an der Bohr- beziehungsweise Schneidstelle vorbeigeführt werden. Das so verwendete Kolloid verfügt über eine ausreichende Fließgeschwindigkeit und kann zudem leicht auch aus engen Hohlräumen, wie sie beispielsweise bei der Herstellung von Einspritzdüsen oder Kühllöchern in Turbinenschaufeln vorliegen, entfernt werden.

Als vorteilhaft hat sich herausgestellt, wenn eine räumliche Ausdehnung der Nanopartikel in zumindest einer Raumrichtung derart gewählt ist, dass eine Anregungsenergie der kollektiven Anregungen der Energie der elektromagnetischen Strahlung entspricht. Auf diese Weise wird der Absorptionsquerschnitt der Nanopartikel optimiert, so dass besonders viel der elektromagnetischen Laserstrahlung absorbiert werden kann.

Vorteilhafterweise sind zumindest einige der Nanopartikel Metallpartikel, insbesondere aus Gold, Silber, Kupfer, Palladium oder einer Legierung mehrerer der Elemente. Natürlich ist es auch möglich, alle Nanopartikel in dieser Form auszuführen. Derartige Nanopartikel können beispielsweise durch Laserstrahlung direkt in der Flüssigkeit erzeugt werden. Dies ist ein sehr sicherer Herstellungsprozess, da auf diese Weise verhindert wird, dass Nanopartikel in die Luft gelangen, die ein Gesundheitsrisiko für Personen darstellen können, die die Nanopartikel beispielsweise einatmen. Zudem ist dieser Prozess sehr flexibel, da aus vielen Metallen oder Legierungen auf diese Weise Nanopartikel erzeugt werden können. Gleichzeitig kann eine Konjugation der Nanopartikel mit anderen Stoffen in der Flüssigkeit erfolgen. Natürlich können die Nanopartikel jedoch auch auf andere Weise hergestellt und erst anschließend in die Flüssigkeit, beispielsweise Wasser oder Aceton, eingebracht werden.

Vorteilhafterweise bestehen zumindest einige der Nanopartikel zumindest teilweise aus einem Chalkogenid, insbesondere einem Kupferselenid und/oder einem Kupfersulfid. Als besonders vorteilhaft hat sich herausgestellt, wenn zumindest einige, bevorzugt alle der Nanopartikel vollständig aus dem Chalkogenid, insbesondere dem Kupferselenid oder dem Kupfersulfit bestehen.

Vorzugsweise werden derartige Nanopartikel in eine organische Flüssigkeit, insbesondere Toluol, eingebracht. Zwar hat beispielsweise Toluol einen relativ geringen Siedepunkt und eine hohe Verdunstungsrate, organische Flüssigkeiten, insbesondere Toluol, weisen jedoch eine geringe Viskosität und damit eine hohe Fliessfähigkeit auf. Versuche haben gezeigt, dass diese Viskosität eine Bewegung der Flüssigkeit mit den sich darin befindende Nanopartikeln ermöglicht, die ausreichend ist, um die durch die Laserstrahlung eingestrahlte Wärmemenge abzuführen. Der nicht absorbierte oder abgelenkte Anteil der eingestrahlten Laserstrahlung, deren Laserleistung mit einigen Watt in der Gößenordnung der bei Laserbearbeitungen zu erwartenden Laserleistungen lag, konnte auf den Promillebereich reduziert werden. Dazu ist es ausreichend, die Flüssigkeit, im vorliegenden Fall also das Toluol, mit den darin enthaltenden Nanopartikeln aus Kupferselenid durch Rühren zu bewegen. Aufgrund der niedrigen Viskosität des Toluols mit den darin enthaltenen Nanopartikeln ist es auf diese Weise nicht nur möglich, eine ausreichende Bewegung zu erzeugen, um die durch den Laser eingebrachte Wärmemenge abzuführen, sondern es wird gleichzeitig möglich, auch kleine und kleinste Zwischenräume und Hohlkörper mit dieser Kombination aus Flüssigkeit und Nanopartikeln zu durchdringen und zu spülen, und so den jeweiligen Rückraum beim Herstellen einer Laserbohrung oder eines Laserschnittes zu schützen.

Viele Metalle, insbesondere Edel- und Halbedelmetalle können Plasmonenresonanzen ermöglichen. Die Anregungsenergien dieser Plasmonen können durch geeignete Wahl des Materials, der Form, der Größe und der Umgebungsbedingung für die Nanopartikel eingestellt und nahezu frei gewählt werden. Auf diese Weise ist es möglich, die Nanopartikel in Abhängigkeit des vorhandenen Lasers auszuwählen. Alternativ kann natürlich auch der Laser an die vorhandenen Nanopartikel angepasst werden. Von Vorteil ist auf jeden Fall, wenn Form, Größe und Material der Nanopartikel auf die eingestrahlte Laserwellenlänge so abgestimmt werden, dass sich eine Plasmonenresonanz oder die Resonanz einer anderen kollektiven Anregung bei der Wellenlänge des eingestrahlten Laserlichtes ergibt.

Beispielsweise können metallische sphärische Goldpartikel verwendet werden, die einen Durchmesser von ca. 30nm (± 10nm) im Durchschnitt aufweisen. Dies führt zu einer Plasmonenresonanz bei ca. 530 nm, so dass elektromagnetische Laserstrahlung dieser Wellenlänge besonders gut von derartigen Nanopartikeln absorbiert werden kann. Wie bereits dargelegt, verkleinern sich die Nanopartikel durch die Laserbestrahlung bis zu einer durchschnittlichen Größe von ca. 5 nm, wobei die Anregungsenergie der jeweiligen plasmonischen kollektiven Anregung leicht ansteigt und einer Energie entspricht, die Photonen mit einer Wellenlänge von 515 nm aufweisen, Je nach Herstellungsmethode können auch Nanopartikel anderer Größe hergestellt werden. So können beispielsweise Nanopartikel mit einer Größe von 100 nm bis ca 300 nm verwendet werden, um längerwellige Photonen zu absorbieren.

Wie bereits dargelegt, ist insbesondere die Verwendung einer eingestrahlten Wellenlänge von 515 nm bei Goldpartikeln von Vorteil, da dies der Plasmonenresonanz von Goldpartikeln mit 5 nm Durchmesser entspricht. Nanopartikel dieser Größe werden durch Laserbestrahlung nicht weiter verkleinert, so dass eine derartige Gold-Nanopartikel-Suspension für einen nahezu unbegrenzten Zeitraum als Rückraumschutz und als Absorptionsmaterial für Laserstrahlung eingesetzt werden kann, ohne die Abschirmwirkung zu verringern oder gar zu verlieren.

Vorteilhafterweise sind zumindest einige der Nanopartikel auf einer Oberfläche von Mikropartikeln angeordnet. Natürlich ist es auch möglich, alle Nanopartikel auf der Oberfläche von Mikropartikeln anzuordnen. Die Verwendung von Mikropartikeln in Flüssigkeiten als Rückraumschutz bei Laserbohr- und Laserschneidverfahren ist aus dem Stand der Technik bekannt. Dabei kommt es jedoch nicht zur Absorption von Laserstrahlung durch kollektive Anregungen der Mikropartikel, sondern zur Streuung der Laserstrahlung, wodurch die Energiedichte der Laserstrahlung verringert wird. Auch auf diese Weise kann verhindert werden, dass die Laserstrahlung nach dem Durchdringen des Werkstückes bei anderen Materialien, die sich insbesondere im Rückraum des Werkstücks befinden, Schaden anrichtet. Wie bereits dargelegt, ist allein durch diesen Effekt ein effektiver Rückraumschutz kaum zu erreichen, da der Wirkungsquerschnitt Streuung an den Mikropartikeln relativ gering und somit die benötigte Konzentration an Mikropartikeln sehr groß ist. Werden jedoch Nanopartikel, wie vorliegend beschrieben, an der Oberfläche der Mikropartikel adsorbiert, werden die durch die Mikropartikel und die Nanopartikel hervorgerufenen unterschiedlichen Effekte kombiniert. Es kommt somit sowohl zur Absorption der elektromagnetischen Laserstrahlung durch die Nanopartikel als auch zur Streuung der Strahlung durch die Mikropartikel, auf deren Oberfläche die Nanopartikel adsorbiert sind.

In einer vorteilhaften Ausgestaltung des Verfahrens sind zumindest einige der Nanopartikel Kohlenstoffnanoröhren. Natürlich können auch alle Nanopartikel als Kohlenstoffnanoröhren ausgebildet sein. Auch in derartigen Kohlenstoffnanoröhren ("carbon nano tubes") können kollektive Anregungen hervorgerufen werden. Die Nanoröhren können in Länge, Wandstärke und Durchmesser nahezu frei einstellbar hergestellt werden, so dass auch in diesem Fall die für die Erzeugung der kollektiven Anregungen nötige Anregungsenergie nahezu frei einstellbar ist. Sie kann auch in diesem Fall in optimaler Weise auf die eingestrahlte Laserwellenlänge eingestellt werden. Kohlenstoffnanoröhren verfügen gegenüber beispielsweise Metallpartikeln über den zusätzlichen Vorteil, dass sie als schwarzes Pulver vorliegen und somit neben dem hohen Absorptionsquerschnitt durch kollektive Anregungen zusätzlich einen relativ hohen Absorptionsquerschnitt durch elektronische Anregungen aufweisen. Sie vereinen somit die Vorteile von Farbstoffen mit den Vorteilen der Nanopartikel mit kollektiven Anregungen.

Vorzugsweise weisen zumindest einige der Nanopartikel an einer Oberfläche eine photosensitive Substanz auf. Natürlich können auch alle Nanopartikel an ihrer Oberfläche mit einer derartigen photonsensitiven Substanz versehen sein. Photosensitive Substanzen sind Farbstoffe oder Pigmente, die geeignet sind, elektromagnetische Strahlung bestimmter Wellenlängen zu absorbieren. Werden diese Farbstoffe auf einer Oberfläche der Nanopartikel angeordnet, verstärken sie folglich den Absorptionsquerschnitt der so versehenen Nanopartikel, da sich nun, ähnlich wie bei den bereits beschriebenen Kohlenstoffnanoröhren, die Effekte der kollektiven Anregungen der Nanopartikel mit den elektronischen Anregungen der photosensitiven Substanzen kombinieren.

Es hat sich als vorteilhaft herausgestellt, wenn die Flüssigkeit Nanopartikel in einer Konzentration von weniger als 4 g/l, bevorzugt weniger als 2 g/l, besonderes bevorzugt weniger als 1 g/l enthält. Die tatsächliche verwendete Konzentration hängt dabei jedoch von einer Vielzahl unterschiedlicher Parameter ab und kann je nach gewünschter Aufgabenstellung und Eigenschaft des Versuchs- beziehungsweise Produktionsaufbaus gewählt werden. Die tatsächliche Konzentration hängt dabei unter anderem von der Intensität der eingestrahlten Laserstrahlung und der Wellenlänge der Laserstrahlung im Vergleich zur Anregungsenergie der kollektiven Anregungen ab. Auch das Raumangebot im Rückraum des zu behandelnden Werkstückes spielt eine wichtige Rolle. Je kleiner der Abstand zum zu schützenden Rückraummaterial ist, desto höher muss die Konzentration der Nanopartikel gewählt werden, um sicherstellen zu können, dass eine ausreichende Menge der eingestrahlten Laserstrahlung absorbiert werden kann. Alternativ oder zusätzlich kann auch die Fließgeschwindigkeit der Flüssigkeit erhöht werden.

Die verwendete Flüssigkeit spielt dabei eine nur untergeordnete Rolle, solange die verwendeten Nanopartikel innerhalb dieser Flüssigkeit stabil sind.

Experimentell wurde im Rahmen eines Beispiels die Absorption von Goldnanopartikeln in Wasser bei einer Laserwellenlänge von 515 nm bestimmt. Die Goldnanopartikel wurden in einer Konzentration von 3,6 g/l in eine Quarzglasküvette mit 2 mm Schichtdicke gefüllt. Diese wurde in einen leicht divergenten Strahlengang eines Pikosekundenlasers eingebracht, wobei sich die Küvette 50 mm unterhalb des Laserfokus befand. Bei einer Eingangsleistung von 3,5 W konnte mit einem thermischen Messkopf keine transmittierte Strahlung gemessen werden. Auch nach 10 s Bestrahlungszeit bildeten sich keine Blasen in der Küvette, durch die die Strahlung hätte hindurchtreten können.

Um einen besseren Vergleich unterschiedlicher Materialien zu ermöglichen, wurde der thermische Messkopf gegen eine Photodiode ausgetauscht. Die angezeigte Pulsspitzenspannung der Photodiode betrug im Durchschnitt 51 mV bei der beschriebenen Gold-Nanopartikel-Suspension. Innerhalb der 10-sekündigen Messdauer gab es nur einen einzigen Peak mit 96 mV Höhe. Im Gegensatz dazu konnte beispielsweise bei einer herkömmlichen pastösen Flüssigkeit, die gemäß dem Stand der Technik für Rückraumschutzversuche verwendet wird, ein Messsignal von 1,76 V gemessen werden. Durch die Gold-Nanopartikel-Suspension wurde folglich eine mindestens 18fach stärkere Extinktion erreicht.

In einem zweiten Versuch wurde die Küvettenposition auf 30 mm Abstand unterhalb des Fokus des Lasers verändert. Die Transmission der Laserstrahlung durch die Gold-Nanopartikel-Suspension ergab 75 mV, wohingegen die in einer pastösen Flüssigkeit gemäß dem Stand der Technik 4,08 V erreichte.

Mit Hilfe zweier Figuren wird nachfolgend die vorliegende Erfindung näher erläutert. Es zeigt
- Figur 1 -: die schematische Darstellung einer Rückwandschädigung beim Laserbohren,
- Figur 2 -: die schematische Darstellung mit einem Verfahren gemäß einem ersten Ausführungsbeispiel der vorliegenden Erfindung.

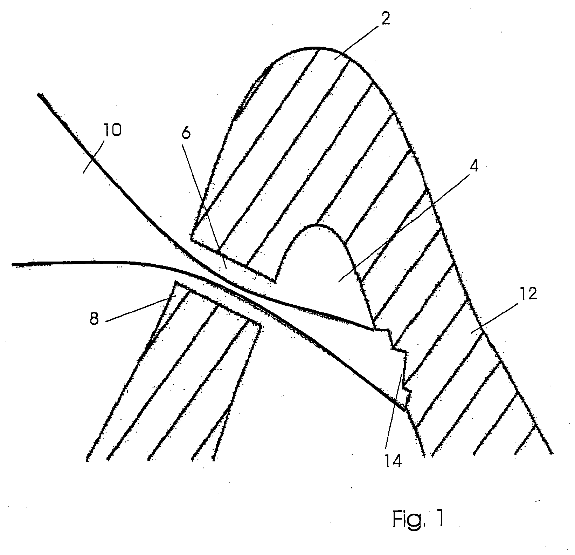

Figur 1 zeigt ein Werkstück 2, in dessen Innerem sich ein Hohlraum 4 befindet. In das Werkstück 2 soll eine Durchgangsbohrung 6 gebohrt werden, wozu eine Vorderseite 8 des Werkstücks 2 mit Laserstrahlung 10 bestrahlt wird.

Im in Figur 1 gezeigten Stadium des Verfahrens ist die Durchgangsbohrung 6 bereits geöffnet, so dass die Laserstrahlung 10 das Werkstück 2 durchdringt. Dabei trifft die Laserstrahlung im Rückraum auf ein Rückraummaterial 12 und führt hier zu einer Schädigung 14. Dies gilt es mit einem Verfahren gemäß einem Ausführungsbeispiel der vorliegenden Erfindung zu vermeiden.

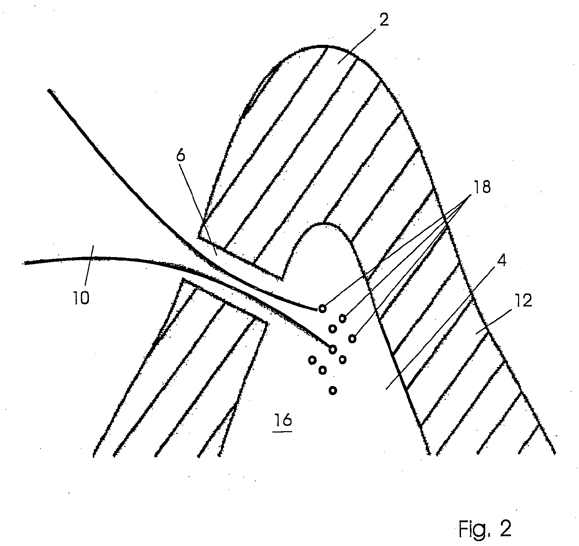

In Figur 2 soll wieder in das Werkstück 2 eine Durchgangsbohrung 6 eingebracht werden, wozu wieder Laserstrahlung 10 verwendet wird. Im Hohlraum 4 befindet sich nun jedoch eine Flüssigkeit 16, in der sich Nanopartikel 18 befinden, die schematisch als Kreise angedeutet sind. Die Laserstrahlung 10 trifft auf die Nanopartikel 18 und sorgt hierfür eine Erzeugung einer kollektiven Anregung, so dass die Laserstrahlung 10 von den Nanopartikel 18 absorbiert wird. Man erkennt, dass das Rückraummaterial 12 unbeschädigt bleibt.

Während die Laserstrahlung 10 die Durchgangsbohrung 6 in das Werkstück 2 einbringt, werden Partikel des Materials des Werkstücks 2 herausgelöst und mit der Flüssigkeit 16 vermischt. Die Flüssigkeit 16 mit den darin enthaltenen Nanopartikeln 18 wird an der Durchgangsbohrung 6 vorbeigeführt und in nicht dargestellten weiteren Verfahrensschritten von den Partikeln aus dem Material des Werkstücks 2 gereinigt. Dies kann beispielsweise über eine Filtration oder über Magnetfelder geschehen. Anschließend wird die Flüssigkeit 16 mit den Nanopartikeln 18 abgekühlt und wieder der in Figur 2 gezeigten Stelle zugeführt.

### Bezugszeichenliste

- 2: Werkstück
- 4: Hohlraum
- 6: Durchgangsbohrung
- 8: Vorderseite
- 10: Laserstrahlung
- 12: Rückraummaterial
- 14: Schädigung
- 16: Flüssigkeit
- 18: Nanopartikel

## Patentansprüche

1. Verfahren zum Laserbohren oder Laserschneiden eines Werkstücks (2), wobei
- von einem Laser ausgesandte elektromagnetische Strahlung (10) auf das Werkstück (2) trifft und
- sich an einer dem Laser abgewandten Seite des Werkstücks (2) eine Flüssigkeit (16) befindet, in der Partikel (18) enthalten sind,
- so dass die von dem Laser ausgesandte elektromagnetische Strahlung (10) auf die Partikel (18) trifft, wenn die elektromagnetische Strahlung (10) das Werkstück (2) durchdrungen hat,
**dadurch gekennzeichnet, dass** die Partikel Nanopartikel sind, und dass die Nanopartikel derart ausgebildet sind, dass mehr als 50% der elektromagnetischen Strahlung (10) von den Nanopartikeln (18) absorbiert wird, indem die elektromagnetische Strahlung (10) in den Nanopartikeln (18) kollektive Anregungen, insbesondere Plasmonen wie beispielsweise Oberflächenplasmonen, erzeugt, wobei Form, Größe und Material der Nanopartikel auf die eingestrahlte Laserwellenlänge so abgestimmt werden, dass sich eine Plasmonenresonanz oder die Resonanz einer anderen kollektiven Anregung bei der Wellenlänge des eingestrahlten Laserlichtes ergibt.

2. Verfahren nach Anspruch 1, **dadurch gekennzeichnet, dass** die Größe und/oder eine Form der Nanopartikel (18) auf die elektromagnetische Strahlung zur Erzeugung der kollektiven Anregungen abgestimmt ist.

3. Verfahren nach Anspruch 1 oder 2, **dadurch gekennzeichnet, dass** die Nanopartikel (18) eine ellipsoide Form, eine Stäbchenform, eine Oktaeder- oder Dekaederform oder eine Quaderform aufweisen.

4. Verfahren nach einem der vorstehenden Ansprüche, **dadurch gekennzeichnet, dass** die elektromagnetische Strahlung (10) eine Wellenlänge zwischen 380 nm und 650 nm, vorzugsweise zwischen 500 nm und 530 nm, insbesondere 515 nm aufweist.

5. Verfahren nach einem der Ansprüche 1 bis 3, **dadurch gekennzeichnet, dass** die elektromagnetische Strahlung (19) eine Wellenlänge zwischen 950 nm und 1100 nm bevorzugt zwischen 1000 nm und 1050 nm, insbesondere 1030 nm aufweist.

6. Verfahren nach einem der vorstehenden Ansprüche, **dadurch gekennzeichnet, dass** eine räumliche Ausdehnung der Nanopartikel (18) in zumindest einer Raumrichtung derart gewählt ist, dass eine Anregungsenergie der kollektiven Anregungen der Energie der elektromagnetischen Strahlung (10) entspricht.

7. Verfahren nach einem der vorstehenden Ansprüche, **dadurch gekennzeichnet, dass** zumindest einige der Nanopartikel (18) Metallpartikel, insbesondere aus Gold, Silber, Kupfer, Palladium oder einer Legierung mehrerer dieser Elemente sind.

8. Verfahren nach einem der vorstehenden Ansprüche, **dadurch gekennzeichnet, dass** zumindest einige der Nanopartikel (18) zumindest teilweise aus einem Chalcogenid, insbesondere einem Kupferselenid und/oder einem Kupfersulfid, bestehen.

9. Verfahren nach einem der vorstehenden Ansprüche, **dadurch gekennzeichnet, dass** zumindest einige der Nanopartikel (18) auf einer Oberfläche von Mikropartikeln angeordnet sind.

10. Verfahren nach einem der vorstehenden Ansprüche, **dadurch gekennzeichnet, dass** zumindest einige der Nanopartikel (18) Kohlenstoffnanoröhren sind.

11. Verfahren nach einem der vorstehenden Ansprüche, **dadurch gekennzeichnet, dass** zumindest einige der Nanopartikel (18) an ihrer Oberfläche eine photosensitive Substanz aufweisen.

12. Verfahren nach einem der vorstehenden Ansprüche, **dadurch gekennzeichnet, dass** die Flüssigkeit (16) Nanopartikel (18) in einer Konzentration von weniger als 4 g/l, bevorzugt weniger als 2 g/l, besonders bevorzugt weniger als 1g/l enthält.

## Claims

1. A method for laser drilling or laser cutting a workpiece (2), wherein
electromagnetic radiation (10) emitted by a laser impinges on the workpiece (2) and
a liquid (16) containing particles (18) is situated on a side of the workpiece (2) facing away from the laser
such that the electromagnetic radiation (10) emitted by the laser impinges on the particles (18) once the electromagnetic radiation (10) has passed through the workpiece (2),
**characterized in that** the particles are nanoparticles, and that the nanoparticles are embodied in such a way that more than 50% of the electromagnetic radiation (10) is absorbed by the nanoparticles (18) by virtue of the electromagnetic radiation (10) generating collective excitations, in particular plasmons such as e.g. surface plasmons, in the nanoparticles (18), wherein form, size and material of the nanoparticles are tuned to the laser wavelength radiated thereon so that a plasmon resonance or the resonance of a different collective excitation emerges at the wavelength of the laser light radiated thereon..

2. The method as claimed in claim 1, **characterized in that** the size and/or a form of the nanoparticles (18) is adapted to the electromagnetic radiation for the purposes of generating the collective excitations.

3. The method as claimed in claim 1 or 2, **characterized in that** the nanoparticles (18) have an ellipsoid form, a rod form, an octahedral form or decahedral form or a cuboid form.

4. The method as claimed in one of the preceding claims, **characterized in that** the electromagnetic radiation (10) has a wavelength of between 380 nm and 650 nm, preferably between 500 nm and 530 nm, more particularly 515 nm.

5. The method as claimed in one of claims 1 to 3, **characterized in that** the electromagnetic radiation (19) has a wavelength of between 950 nm and 1100 nm, preferably between 1000 nm and 1050 nm, more particularly of 1030 nm.

6. The method as claimed in one of the preceding claims, **characterized in that** a spatial extent of the nanoparticles (18) is selected in such a way in at least one spatial direction that an excitation energy of the collective excitations corresponds to the energy of the electromagnetic radiation (10).

7. The method as claimed in one of the preceding claims, **characterized in that** at least some of the nanoparticles (18) are metal particles, more particularly made of gold, silver, copper, palladium or an alloy of a plurality of these elements.

8. The method as claimed in one of the preceding claims, **characterized in that** at least some of the nanoparticles (18) consist at least in part of a chalcogenide, more particularly a copper selenide and/or a copper sulfide.

9. The method as claimed in one of the preceding claims, **characterized in that** at least some of the nanoparticles (18) are arranged on a surface of microparticles.

10. The method as claimed in one of the preceding claims, **characterized in that** at least some of the nanoparticles (18) are carbon nanotubes.

11. The method as claimed in one of the preceding claims, **characterized in that** at least some of the nanoparticles (18) have a photosensitive substance on the surface thereof.

12. The method as claimed in one of the preceding claims, **characterized in that** the liquid (16) contains nanoparticles (18) with a concentration of less than 4 g/l, preferably less than 2 g/l, particularly preferably less than 1 g/l.

## Revendications

1. Procédé de perçage au laser ou de découpe au laser d'une pièce à oeuvrer (2), dans lequel
- un rayonnement électromagnétique (10) émis par un laser tombe sur la pièce à oeuvrer (2), et
- un liquide (16) se trouve sur un côté de la pièce à oeuvrer (2) détourné du laser, liquide dans lequel sont contenues des particules (18),
de sorte que le rayonnement électromagnétique (10) émis par le laser tombe sur les particules (18) lorsque le rayonnement électromagnétique (10) a traversé la pièce à oeuvrer (2),
**caractérisé en ce que**
les particules sont des nanoparticules, et **en ce que**
les nanoparticules sont réalisées de telle sorte que plus de 50 % du rayonnement électromagnétique (10) sont absorbés par les nanoparticules (18) du fait que le rayonnement électromagnétique (10) génère dans les nanoparticules (18) des excitations collectives, en particulier des plasmons tels que par exemple des plasmons de surface, la forme, la taille et le matériau des nanoparticules étant ajustés à la longueur d'onde laser incidente de telle sorte qu'il en résulte une résonance des plasmons ou la résonance d'une autre excitation collective pour la longueur d'onde de la lumière laser incidente.

2. Procédé selon la revendication 1,
**caractérisé en ce que**
la taille et/ou une forme des nanoparticules (18) est ajustée au rayonnement électromagnétique pour générer les excitations collectives.

3. Procédé selon la revendication 1 ou 2,
**caractérisé en ce que**
les nanoparticules (18) ont une forme ellipsoïdale, une forme de barreau, une forme d'octaèdre ou de décaèdre ou une forme parallélépipédique.

4. Procédé selon l'une des revendications précédentes,
**caractérisé en ce que**
le rayonnement électromagnétique (10) présente une longueur d'onde entre 380 nm et 650 nm, de préférence entre 500 nm et 530 nm, en particulier de 515 nm.

5. Procédé selon l'une des revendications 1 à 3,
**caractérisé en ce que**
le rayonnement électromagnétique (10) présente une longueur d'onde entre 950 nm et 1100 nm, de préférence entre 1000 nm et 1050 nm, en particulier de 1030 nm.

6. Procédé selon l'une des revendications précédentes,
**caractérisé en ce que**
une extension dans l'espace des nanoparticules (18) dans au moins une direction spatiale est choisie de telle sorte qu'une énergie des excitations collectives correspond à l'énergie du rayonnement électromagnétique (10).

7. Procédé selon l'une des revendications précédentes,
**caractérisé en ce que**
quelques-unes au moins des nanoparticules (18) sont des particules métalliques, en particulier en or, argent, cuivre, palladium ou en un alliage de plusieurs de ces éléments.

8. Procédé selon l'une des revendications précédentes,
**caractérisé en ce que**
quelques-unes au moins des nanoparticules (18) sont constituées au moins partiellement d'un chalcogénure, en particulier d'un séléniure de cuivre et/ou d'un sulfure de cuivre.

9. Procédé selon l'une des revendications précédentes,
**caractérisé en ce que**
quelques-unes au moins des nanoparticules (18) sont disposées sur une surface de microparticules.

10. Procédé selon l'une des revendications précédentes,
**caractérisé en ce que**
quelques-unes au moins des nanoparticules (18) sont des nanotubes de carbone.

11. Procédé selon l'une des revendications précédentes,
**caractérisé en ce que**
quelques-unes au moins des nanoparticules (18) présentent sur leur surface une substance photosensible.

12. Procédé selon l'une des revendications précédentes,
**caractérisé en ce que**
le liquide (16) contient des nanoparticules (18) en une concentration de moins de 4 g/l, de préférence de moins de 2 g/l, de manière particulièrement préférée de moins de 1 g/l.
